# DEMANDE DE BREVET EUROPEEN

(11) **EP 1 454 692 A1**
(43) Date de publication de la demande: **08.09.2004**
(21) Numéro de dépôt: 04352004.8
(22) Date de dépôt: 01.03.2004
(51) Int. Cl.: B23B 47/28

(54) **Gabarit de forage de chevilles**

(30) Priorité: 07.03.2003 FR 0302819
(71) Demandeur: Todo, Louis, 11300 Limoux (FR)
(72) Inventeur: Todo, Louis, 11300 Limoux (FR)

(57) **Abrégé**

Le gabarit comprend un plateau (1) et des réglettes (2, 3 et 4) pour bien placer des éléments de menuiserie (11, 12), qui seront percés par des mèches introduites dans des guides (6, 7) en créant des vides qui seront réservés à des tourillons d'assemblage. Un système de serrage (10) et un dispositif de marquage (9) pour une cheville d'arrêt sont ajoutés. Les guides (6, 7) sont orientés et disposés de façon à venir en prolongement par paires quand les pièces (11, 12) sont assemblés en onglet.

## Description

Le sujet de cette invention est un gabarit pour préparer des assemblages chevillés de pièces de menuiserie, et plus précisément utile pour percer avec précision des réservations (trous) pour recevoir des tourillons d'assemblage.

Une application importante de l'invention est l'assemblage en menuiserie de montants et de traverses à onglet, c'est-à-dire à angle droit après avoir biseauté leurs bouts à 45 degrés. L'assemblage est complété par des tourillons qui aident à maintenir les pièces à une position invariable. De tels assemblages sont fastidieux à réaliser puisqu'ils doivent être serrés de chaque côté de l'angle droit tant que la colle n'a pas séché.

Un premier objet de l'invention est d'exécuter facilement les réservations pour les tourillons d'assemblage.

Un autre objet de l'invention est de réaliser un assemblage de pièces de menuiserie à onglet de façon simple, en éliminant les difficultés d'un serrage prolongé. D'autres objets de l'invention apparaîtront de la description qui suit.

Pour résumer, l'invention est relative sous sa forme la plus générale à un gabarit pour préparer des assemblages chevillés de pièces de menuiserie, comprenant au moins une réglette d'appui latéral des pièces et deux réglettes d'appui extrême des pièces, les réglettes d'appui extrême étant associées à la réglette d'appui latéral en formant avec elle des angles semblables à des angles respectifs de biseautage en bout des pièces, et des guides ou canons de mèches de perçage, qui sont disposés sur les réglettes d'appui extrême de façon à donner des groupes de perçages en prolongement sur les pièces assemblées.

D'autres caractéristiques de l'invention apparaîtront au moyen de la description des figures suivantes :

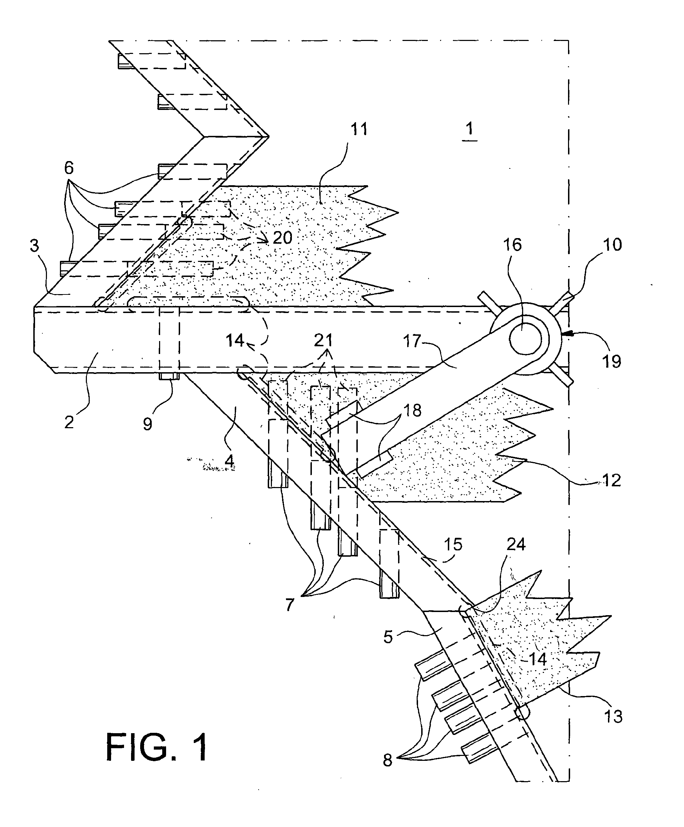

- la figure 1 est une vue générale de l'invention ;
- et la figure 2 est une vue schématique d'un assemblage à onglet.

Le gabarit comprend un plateau 1 sur lequel des pièces de menuiserie 11, 12 et 13 sont posées pour être préparées à l'assemblage. Il porte des réglettes 2, 3, 4 et 5 dont la première est une réglette d'appui latéral et les autres des réglettes d'appui extrême. Celles-ci portent des guides de mèches de perçage 6, 7 et 8 destinés à percer les réservations de tourillons dans les pièces 11, 12 et 13, en introduisant des mèches à travers eux. De plus, la réglette d'appui latéral 2 porte un autre guide de mèche 9, destiné à marquer un emplacement de perçage d'une cheville d'arrêt pour l'assemblage.

Le plateau 1 comporte des lumières 14 devant les réglettes d'appui extrêmes 3, 4 et 5, ainsi que devant le guide de mèche 9, afin de permettre l'évacuation des déchets de perçage. Les réglettes 2 à 5 comprennent aussi des rainures 15 horizontales sur leur face d'appui des pièces 11, 12 et 13 pour assurer la même fonction.

Une presse 10 complète le gabarit. Elle comporte un mât 16 s'élevant sur la réglette d'appui latéral 2, un bras 17 soutenu par le mât 16 et tournant horizontalement en faisant pivoter le mât 16, et une mâchoire 18 au bout du bras 17. Le bras 17 peut aussi coulisser sur le mât 16 par un mécanisme de réglage quelconque 19, par exemple à cabestan et à vis. On peut ainsi le déplacer de manière à serrer n'importe laquelle des pièces 11, 12 et 13 considérées.

La pièce 11 est une traverse devant recevoir des tourillons parallèles à elle. La pièce 12 est un montant destiné à recevoir les tourillons perpendiculairement à elle. Les pièces 11 et 12 sont toutes deux biseautées à 45 degrés, et les réglettes 3 et 4 qui leur servent respectivement de faces d'appui extrême sont orientées d'un même angle par rapport à la règle 2, à laquelle elles sont assujetties en s'étendant de deux côtés opposés sur le plateau 1. Ainsi, en appuyant les pièces 11 et 12 chacune sur une face de la réglette 2 d'appui latéral et sur une réglette respective d'appui extrême 3 ou 4 par leur face en biseau, on les place avec une grande précision sur le gabarit.

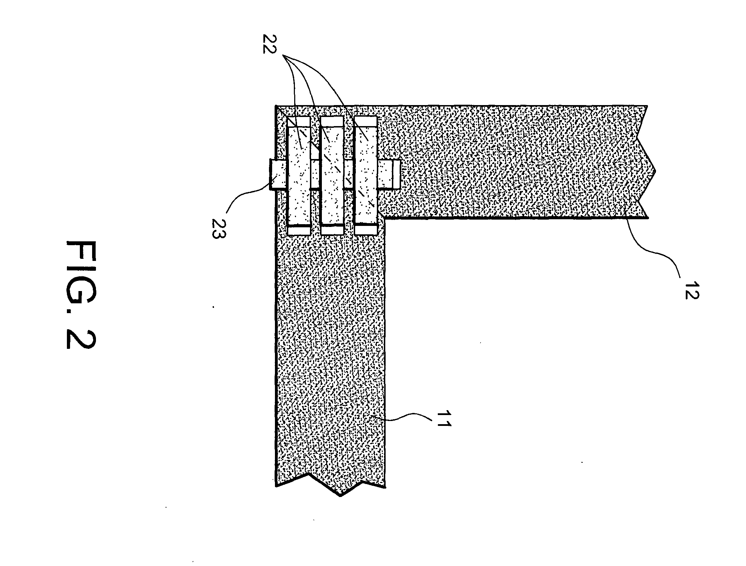

Une mèche de perçage est alors introduite successivement à travers les guides de mèches de perçage 6 et 7 pour réaliser les réservations, portant les références 20 et 21. Pour chacune des réglettes 3 et 4, les guides de mèches de perçage 6 et 7 sont distribués en groupes semblables par le nombre et la disposition. Cependant, les guides 6 sont dirigés dans le sens longitudinal de la traverse 11 et les guides 7 le sont dans le sens transversal du montant 12. Comme le montre la figure 2, l'assemblage à onglet des pièces 11 et 12 place les réservations 20 et 21 en prolongement par paires, qui peuvent recevoir les tourillons borgnes 22 et permettent ainsi l'assemblage. L'assemblage est complété par une chenille d'arrêt 23 engagée perpendiculaire au tourillon 22 dans une réservation opérée dès l'assemblage des pièces 11 et 12, par une perceuse s'enfonçant à partir d'une marque opérée antérieurement au moyen du guide de perçage 9. Quand la cheville 23 est mise, le desserrage de l'assemblage des pièces 11 et 12 s'ensuit sans inconvénient et sans qu'on doive attendre que la colle sèche.

Ce gabarit est destiné, entre autres, à tout type de bois et toute section de pièces de menuiserie. Les guides de mèches de perçage 6 et 7 sont assez nombreux pour permettre d'installer un nombre voulu de tourillons dans telle ou telle portion de l'assemblage. De plus, on peut envisager plusieurs niveaux de guides pour des tourillons plus nombreux ou mieux répartis et un assemblage meilleur. Le même effet pourrait être obtenu en dédoublant le gabarit en deux parties symétriques avec un seul rang des guides de mèches de perçage et en retournant les pièces 11 et 12 d'une opération à l'autre.

La réglette 5 et ses guides de mèches de perçage 8 sont ajoutés pour des pièces 13 recevant des tourillons perpendiculairement à leur face d'extrémité, en menuiserie cintrée par exemple. A cet effet, les guides de mèches de perçage 8 sont placés perpendiculaires à la réglette 5. Un appui latéral de la pièce 13 est réalisé comme ailleurs, ici par une arête latérale 24 de la réglette d'appui extrême 4 adjacente.

## Revendications

1. Gabarit pour préparer des assemblages chevillés de pièces (11, 12) de menuiserie, comprenant au moins une réglette d'appui latéral (2) des pièces et deux réglettes d'appui extrême (3, 4) des pièces, les réglettes d'appui extrême étant associées à la réglette d'appui latéral en formant avec elle des angles semblables à des angles respectifs de biseautage en bout des pièces (11, 12), et des guides de mèches de perçage (6, 7), qui sont disposés sur les réglettes d'appui extrême de façon à donner des groupes de perçages en prolongement sur les pièces assemblées, **caractérisé en ce que** les guides des mèches de perçage d'une première réglette d'appui extrême sont disposés dans un sens longitudinal d'une des pièces de menuiserie, qui est associée à ladite première réglette d'appui extrême, et les guides des mèches de perçage de l'autre des réglettes d'appui sont disposés dans un sens transversal d'une autre des pièces de menuiserie, qui est associée à ladite autre des réglettes d'appui extrême.

2. Gabarit selon la revendication 1, **caractérisé en ce qu'**un guide de marquage (9) pour un perçage ultérieur d'une cheville (23) d'arrêt est disposé sur la réglette d'appui latéral (2), de façon que ladite cheville soit perpendiculaire auxdits groupes de perçages en prolongeant dans lesdites pièces assemblées.

3. Gabarit selon l'une quelconque des revendications 1 ou 2, **caractérisé en ce que** les réglettes d'appui extrême (3, 4) sont montées de côtés opposés de la réglette d'appui latéral (2).

4. Gabarit selon la revendication 1, 2 ou 3, **caractérisé en ce qu'**il comprend un plateau (1) sur lequel les réglettes sont disposées, et une mâchoire (18) de serrage des pièces mobile verticalement au-dessus du support.

5. Gabarit selon les revendications 3 et 4, **caractérisé en ce que** la machoîre est montée sur un bras (17) tournant autour d'un mât (16) retenu sur la réglette d'appui latéral.

6. Gabarit selon la revendication 4, **caractérisé en ce que** le support présente des lumières (14) devant les réglettes d'appui extrême.

7. Gabarit selon l'une quelconque des revendications précédentes, **caractérisé en ce que** les réglettes sont rainurées (15) sur des faces d'appui des pièces.

8. Gabarit selon l'une quelconque des revendications précédentes, **caractérisé en ce qu'**il comprend une troisième réglette (5) d'appui extrême, et des guides de mèches de perçage (8) qui sont disposés perpendiculairement sur elle.
